# EUROPÄISCHE PATENTANMELDUNG

(11) **EP 0 662 582 A1**
(43) Veröffentlichungstag der Anmeldung: **12.07.1995**
(21) Anmeldenummer: 94120886.0
(22) Anmeldetag: 29.12.1994
(51) Int. Cl.: F16M 7/00

(54) **Nivellierschuh zur Höhenausrichtung von Maschinen und Geräten**

(30) Priorität: 05.01.1994 DE 4400164
(71) Anmelder: Müller Industrievertretungen GmbH, D-71679 Asperg (DE)
(72) Erfinder: Schmidt, Horst, D-45549 Sprockhövel (DE)
(74) Vertreter: Mentzel, Norbert, Dipl.-Phys.

(57) **Zusammenfassung**

Nivellierschuh zur Höhenausrichtung von Maschinen und Geräten, bestehend aus einer zum Abstützen des Schuhs auf einer Unterlage bestimmten Fußplatte (10) und einer als Auflager für eine abzustützende Maschine oder abzustützendes Gerät bestimmte Kopfplatte (11), wobei zwischen der Fußplatte (10) und der Kopfplatte (11) ein verstellbares Keilstück (12) angeordnet ist und mit einer geneigten Fläche gegen eine geneigte Fläche der Kopfplatte (11) anliegt, wobei das verstellbare Keilstück (12) ringförmig ausgebildet ist und an der inneren Mantelfläche ein Gewinde (13) zum Eingriff eines an der äußeren Mantelfläche der Kopfplatte vorgesehenes Außengewindes (14) aufweist und an der äußeren Mantelfläche als Schneckenrad (16) zum Eingriff einer Schnecke (17) ausgebildet ist.

## Beschreibung

Die Erfindung betrifft einen Nivellierschuh zur Höhenausrichtung von Maschinen und Geräten, bestehend aus einer zum Abstützen des Schuhs auf einer Unterlage bestimmten Fußplatte und einer als Auflager für eine abzustützende Maschine oder abzustützendes Gerät bestimmte Kopfplatte, wobei zwischen der Fußplatte und der Kopfplatte ein verstellbares Keilstück angeordnet ist und mit einer geneigten Fläche gegen eine geneigte Fläche der Kopfplatte anliegt.

Bei diesem aus der DE-PS 12 97 409 bekannten Nivellierschuh sind die Fußplatte und die Kopfplatte im wesentlichen rechteckig ausgebildet und das zwischen diesen beiden Platten vorgesehene Keilstück in Längsrichtung von Fußplatte und Kopfplatte mit einem Gewindezapfen verstellbar. Je nach der eingestellten Höhe ragt dabei das verstellbare Keilstück entweder aus dem einen Endbereich oder aus dem anderen Endbereich von Fußplatte und Kopfplatte heraus. Der Gewindezapfen greift dabei unmittelbar an das Keilstück an, so daß für eine feine Verstellung das Keilstückes ein feines Gewinde aufweisen muß. Ein solches feines Gewinde beeinträchtigt jedoch die Festigkeit des Gewindes.

Der Erfindung liegt die Aufgabe zugrunde einen solchen Nivellierschuh der eingangs erläuterten Art weiter zu verbessern, wobei eine gute Festigkeit erzielt wird, trotz feinstufiger Verstellung und die Außenmaße des Schuhs gering sind.

Diese Aufgabe ist erfindungsgemäß dadurch gelöst, daß das verstellbare Keilstück ringförmig ausgebildet ist und an der inneren Mantelfläche ein Gewinde zum Eingriff eines an der äußeren Mantelfläche der Kopfplatte vorgesehenen Außengewindes aufweist und an der äußeren Mantelfläche als Schneckenrad zum Eingriff einer Schnecke ausgebildet ist. Dadurch wird in einfacher und zuverlässiger Weise ein Nivellierschuh geschaffen, der geringe Außenabmessungen aufweist und mit der erforderlichen Festigkeit versehen ist. Das verstellbare Keilstück ist dabei ringförmig ausgebildet und weist an der inneren Mantelfläche ein Gewinde zum Eingriff eines an der äußeren Mantelfläche der Kopfplatte vorgesehenen Außengewindes auf. Keilstück und Kopfplatte sind somit in einfacher und zuverlässiger Weise als Verschraubung ausgebildet und weisen die erforderliche Festigkeit auf. Um eine feine Verstellung zu erzielen weist das Keilstück an der äußeren Mantelfläche eine Ausbildung als Schneckenrad auf, die zum Eingriff einer Schnecke dient.

Das ringförmig ausgebildete Keilstück kann mit ihrer ebenen unteren Stirnfläche auf die ebene Oberfläche der Fußplatte aufliegen und mit ihrer äußeren als Schneckenrad ausgebildeten Mantelfläche in einem die Schnecke aufnehmenden ringförmigen Gehäuse geführt sein. Dadurch ist in einfacher Weise das drehbare Keilstück zuverlässig auf der Fußplatte und innerhalb des Gehäuses geführt.

Das ringförmige Gehäuse kann mit Schrauben an der Fußplatte gehaltert sein und an ihrer der Fußplatte abgekehrten Stirnfläche eine ringförmige Abdeckung aufweisen, die mit Schrauben am Gehäuse gehaltert ist. Dadurch ist in einfacher Weise das drehbare Keilstück zuverlässig im Gehäuse geführt und einerends gegen die Fußplatte und anderends mit der Abdeckung gegen axiale Verschiebung gesichert.

Das an der inneren Mantelfläche des ringförmigen Keilstückes vorgesehene Innengewinde und das damit zusammenwirkende, an der äußeren Mantelfläche der ringförmigen Kopfplatte vorgesehene Außengewinde kann als eingängiges Sägengewinde ausgebildet sein. Dadurch wird in einfacher Weise eine besonders hohe Festigkeit in der Belastungsrichtung erzielt.

Das an der inneren Mantelfläche des ringförmigen Keilstückes vorgesehene Innengewinde kann sich über die gesamte Höhe des ringförmigen Keilstückes erstrecken und das damit zusammenwirkende, an der äußeren Mantelfläche der ringförmigen Kopfplatte vorgesehene Außengewinde am unteren Rand der Kopfplatte sich nur über die halbe Höhe des ringförmigen Keilstückes erstrecken und mit einer vom oberen Rand des Außengewindes gebildeten Kante als Anschlag gegen die ringförmige Abdeckung dienen. Dadurch weist die in senkrechter Richtung wirkende Verschraubung eine ausreichende Festigkeit auf und im gesamten Verstellbereich ist das Außengewinde der Kopfplatte im vollen Eingriff mit dem Innengewinde des Keilstückes.

Das an der äußeren Mantelfläche der ringförmigen Kopfplatte vorgesehene und sich nur über die halbe Höhe des ringförmigen Keilstückes erstreckende Außengewinde kann am unteren Rand der Kopfplatte mit einem vom unteren Rand gebildeten Stirnfläche als Anschlag gegen die Fußplatte dienen. Dadurch wird in einfacher Weise die Verstellung der Kopfplatte nach unten begrenzt.

Die Kopfplatte kann an der äußeren Mantelfläche, in dem Bereich, der frei vom Außengewinde ist, eine Abflachung aufweisen, in die ein entsprechender Vorsprung der ringförmigen Abdeckung eingreift. Dadurch wird in einfacher Weise mit der ringförmigen Abdeckung eine Anlage geschaffen, mit der die Kopfplatte gegen Drehen gesichert wird, insbesondere, wenn das mit der Kopfplatte zusammenwirkende Keilstück gedreht wird.

Die Schnecke kann in einem Durchbruch des Gehäuses drehbar gelagert sein und etwa in seiner Längsmitte einen eingängigen Schneckengang und an dem einen Ende einen Sechskantkopf und an dem anderen Ende eine Sechskantmutter aufweisen, die als Anschläge für die von Anschlagflächen des Gehäuses gebildeten Abflachungen dienen. Dadurch ist in einfacher und zuverlässiger Weise die Schnecke drehbar im Gehäuse gelagert und gegen axiale Verschiebung gesichert.

Die ringförmige Kopfplatte kann oberseitig eine kalottenförmige Auflagefläche für eine entsprechend ausgebildete Stützplatte aufweisen. Mit dieser in der kalottenförmigen Auflagefläche gelagerten Stützplatte ist somit eine Anpaßung an alle Neigungen möglich.

Die im Durchbruch des Gehäuses drehbar gelagerte Schnecke kann formschlüssig mit einer zweiten im Durchbruch eines zweiten Gehäuses drehbar gelagerten Schnecke miteinander kuppelbar sein, wobei die beiden Gehäuse zusammen auf der Fußplatte gehaltert sind. Dadurch wird eine höhere Belastbarkeit ermöglicht. Die Drehbewegung der ersten Schnecke wird dadurch in einfacher Weise synchron auf die zweite Schnecke übertragen. In der Folge bewegen sich die beiden Kopfplatten beider Nivellierschuhe ebenfalls synchron in vertikaler Richtung.

In der Zeichnung ist die Erfindung in einem Ausführungsbeispiel dargestellt, und zwar zeigen:
- Fig. 1: einen erfindungsgemäßen Nivellierschuh in Draufsicht und
- Fig. 2: einen Schnitt nach der Linie II - II der Fig. 1.

Der dargestellte Nivellierschuh dient zur Höhenausrichtung von Maschinen und Geräten. Der Nivellierschuh besteht aus einer zum Abstützen des Schuhs auf einer nicht näher dargestellten Unterlage bestimmten Fußplatte 10 und einer als Auflage für eine nicht näher dargestellte, abzustützende Maschine oder abzustützendes Gerät bestimmte Kopfplatte 11. Zwischen der Fußplatte 10 und der Kopfplatte 11 ist dabei ein verdrehbares, ringförmiges Keilstück 12 angeordnet. Das verdrehbare Keilstück 12 ist ringförmig ausgebildet und weist an seiner inneren, zylidrischen Mantelfläche ein Gewinde 13 zum Eingriff eines an der äußeren Mantelfläche der Kopfplatte 11 vorgesehenen Außengewindes 14 auf. Das verdrehbare Keilstück 12 ist weiterhin an der äußeren Mantelfläche 15 als Schneckenrad 16 zum Eingriff einer Schnecke 17 ausgebildet. In noch zu beschreibender Weise kann dadurch durch Drehen der Schnecke 17 das als Schneckenrad 16 ausgebildete Keilstück 12 gedreht werden, wodurch über die Gewinde 13 und 14 sich die Kopfplatte 11 gegenüber der Fußplatte 10 anhebt bzw. absenkt.

Das ringförmig ausgebildete Keilstück 12 liegt mit ihrer ebenen unteren Stirnfläche 18 auf die ebene Oberfläche 19 der Fußplatte 10 auf und ist mit ihrer äußeren als Schneckenrad 16 ausgebildeten Mantelfläche 15 in einem die Schnecke 17 aufnehmenden ringförmigen Gehäuse 20 geführt. Dadurch ist in einfacher Weise das ringförmige Keilstück 12 zuverlässig auf der Oberfläche 19 der Fußplatte 10 gelagert und in dem Gehäuse 20 gegen seitliche Verschiebung gesichert.

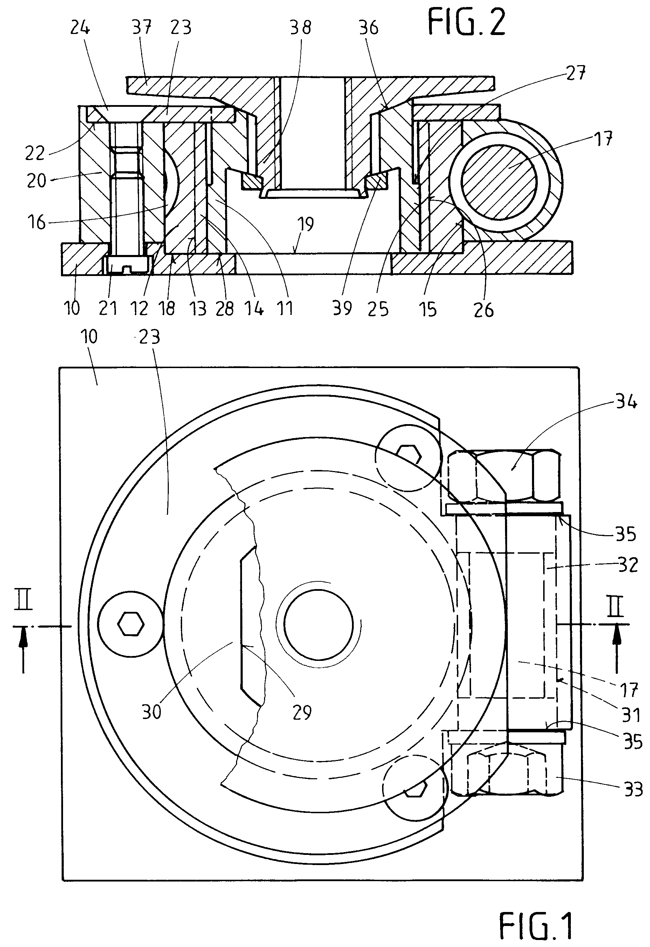

Wie insbesondere aus der Fig. 2 ersichtlich, ist das ringförmige Gehäuse 20 mit Schrauben 21 an der Fußplatte 10 gehaltert und weist an ihrer der Fußplatte 10 abgekehrten Stirnfläche 22 eine ringförmige Abdeckung 23 auf, die mit Schrauben 24 am Gehäuse 21 gehaltert ist. Das Gehäuse 20 weist somit zusammen mit der Fußplatte 10 und der Abdeckung 23 eine geschlossene Aufnahme für das drehbare Keilstück 12 auf.

Das an der inneren Mantelfläche 25 des ringförmigen Keilstückes 12 vorgesehene Innengewinde 13 und das damit zusammenwirkende, an der äußeren Mantelfläche 26 der ringförmigen Kopfplatte 11 vorgesehene Außengewinde 14 können in nicht näher dargestellter Weise als eingängiges Gewinde ausgebildet sein. Dadurch wird eine besonders hohe Belastbarkeit in Auflagerichtung erzielt.

Das an der inneren Mantelfläche 25 des ringförmigen Keilstückes 12 vorgesehene Innengewinde 13 erstreckt sich über die gesamte Höhe des ringförmigen Keilstückes 12. Das damit zusammenwirkende, an der äußeren Mantelfläche 26 der ringförmigen Kopfplatte 11 vorgesehene Außengewinde 14 am unteren Rand der Kopfplatte 11 erstreckt sich nur über die halbe Höhe des ringförmigen Keilstückes 12 und dient mit einer vom oberen Rand des Außengewindes 14 gebildeten Kante 27 als Anschlag gegen die ringförmige Abdeckung 23. Dadurch wird in einfacher und zuverlässiger Weise die Höhenverstellung der Kopfplatte 11 begrenzt, wobei der Verstellweg etwa die Hälfte der Höhe des Keilstückes 12 entspricht.

Das an der äußeren Mantelfläche 26 der ringförmigen Kopfplatte 11 vorgesehene und sich nur über die halbe Höhe des ringförmigen Keilstückes 12 erstreckende Außengewinde 14 dient am unteren Rand der Kopfplatte 12 mit einem vom unteren Rand gebildeten Stirnfläche 28 als Anschlag gegen die Fußplatte 10. Auch hierdurch wird die Hubbewegung der Kopfplatte 11 durch das Anschlagen gegen die Fußplatte 10 begrenzt.

Die Kopfplatte 11 weist an der äußeren Mantelfläche 26, in dem Bereich, der frei von dem Außengewinde 14 ist, eine Abflachung 29 auf, in die ein entsprechender Vorsprung 30 der ringförmigen Abdeckung 23 eingreift. Dadurch wird in einfacher Weise die Kopfplatte 11 bei einem Drehen des Keilstückes 12 gegen Mitdrehen gesichert.

Die Schnecke 17 ist in einem Durchbruch 31 des Gehäuses 20 drehbar gelagert und weist etwa in seiner Längsmitte einen eingängigen Schneckengang 32 und an dem einen Ende eine Sechskantkopf 33 und an dem anderen Ende eine Sechskantmutter 34 auf, die unter Zwischenlage von Unterlegscheiben 35 als Anschläge für die von Anschlagflächen des Gehäuses 20 gebildeten Abflachungen dienen. Dadurch ist in einfacher und zuverlässiger Weise die Schnecke 17 im Gehäuse gelagert und gegen axiale Verschiebung gesichert und greift mit dem Schneckengang 32 in das Schneckenrad 16 des Keilstückes 12 ein.

Die ringförmige Kopfplatte 11 weist oberseitig eine kalottenförmige Auflagefläche 36 für eine entsprechend ausgebildete Stützplatte 37 auf. Mit dieser kalottenförmigen Auflagefläche 36 kann sich die Stützplatte 37 selbsttätig den sich ergebenden Neigungen der abzustützenden Maschinen bzw. Geräten anpassen.

Die Stützplatte 37 durchgreift mit einem Ansatz 38 die ringförmige Kopfplatte 11 und weist einen durch Verformung gebildeten Anschlagring 39 auf, der ein Abheben der Stützplatte 37 von der Kopfplatte 11 verhindert.

Wie bereits erwähnt, ist die dargestellte Ausführung lediglich eine beispielsweise Verwirklichung der Erfindung und diese nicht darauf beschränkt. Vielmehr sind noch mancherlei andere Ausführungen und Abänderungen möglich. So kann die im Durchbruch 31 des Gehäuses 20 drehbar gelagerte Schnecke 17 formschlüssig mit einer zweiten im Durchbruch 31 eines zweiten Gehäuses drehbar gelagerten Schnecke 17 miteinander gekuppelt sein, wobei die beiden Gehäuse 20 zusammen auf der Fußplatte 10 gehaltert sind. Dadurch wird eine höhere Belastbarkeit ermöglicht. Die Drehbewegung der ersten Schnecke 17 wird dadurch in einfacher Weise synchron auf die zweite Schnecke 17 übertragen. In der Folge bewegen sich die beiden Kopfplatten beider Nivellierschuhe ebenfalls synchron in vertikaler Richtung.

### Bezugszeichenliste:

- 10: Fußplatte
- 11: Kopfplatte
- 12: Keilstück
- 13: Gewinde
- 14: Gewinde
- 15: äußere Mantelfläche
- 16: Schneckenrad
- 17: Schnecke
- 18: untere Stirnfläche
- 19: Oberfläche
- 20: Gehäuse
- 21: Schrauben
- 22: Stirnfläche
- 23: Abdeckung
- 24: Schrauben
- 25: innere Mantelfläche
- 26: äußere Mantelfläche
- 27: Kante
- 28: untere Stirnfläche
- 29: Abflachung
- 30: Vorsprung
- 31: Durchbruch
- 32: Gewindegang
- 33: Sechskantkopf
- 34: Sechskantmutter
- 35: Anschlagfläche
- 36: Auflagefläche
- 37: Stützplatte
- 38: Ansatz
- 39: Anschlagring

## Patentansprüche

1. Nivellierschuh zur Höhenausrichtung von Maschinen und Geräten, bestehend aus einer zum Abstützen des Schuhs auf einer Unterlage bestimmten Fußplatte und einer als Auflager für eine abzustützende Maschine oder abzustützendes Gerät bestimmte Kopfplatte, wobei zwischen der Fußplatte und der Kopfplatte ein verstellbares Keilstück angeordnet ist und mit einer geneigten Fläche gegen eine geneigte Fläche der Kopfplatte anliegt,
**dadurch gekennzeichnet,**
daß das verstellbare Keilstück (12) ringförmig ausgebildet ist und an der inneren Mantelfläche (25) ein Gewinde (13) zum Eingriff eines an der äußeren Mantelfläche (26) der Kopfplatte (11) vorgesehenen Außengewindes (14) aufweist und an der äußeren Mantelfläche (15) als Schneckenrad (16) zum Eingriff einer Schnecke (17) ausgebildet ist.

2. Nivellierschuh nach Anspruch 1, dadurch gekennzeichnet, daß das ringförmig ausgebildete Keilstück (12) mit ihrer ebenen unteren Stirnfläche (18) auf die ebene Oberfläche (19) der Fußplatte (10) aufliegt und mit ihrer äußeren, als Schneckenrad (16) ausgebildete Mantelfläche (15) in einem die Schnecke (16) aufnehmenden ringförmigen Gehäuse (20) geführt ist.

3. Nivellierschuh nach Anspruch 1 oder 2, dadurch gekennzeichnet, daß das ringförmige Gehäuse (20) mit Schrauben (21) an der Fußplatte (10) gehaltert ist und an ihrer der Fußplatte (10) abgekehrten Stirnfläche (22) eine ringförmige Abdeckung (23) aufweist, die mit Schrauben (24) am Gehäuse (21) gehaltert ist.

4. Nivellierschuh nach einem der Ansprüche 1 bis 3, dadurch gekennzeichnet, daß das an der inneren Mantelfläche (25) des ringförmigen Keilstückes (12) vorgesehene Innengewinde (13) und das damit zusammenwirkende, an der äußeren Mantelfläche (26) der ringförmigen Kopfplatte (11) vorgesehene Außengewinde (14) als eingängiges Sägengewinde ausgebildet ist.

5. Nivellierschuh nach einem der Ansprüche 1 bis 4, dadurch gekennzeichnet, daß das an der inneren Mantelfläche (25) des ringförmigen Keilstückes (12) vorgesehene Innengewinde (13) sich über die gesamte Höhe des ringförmigen Keilstückes (12) erstreckt und das damit zusammenwirkende, an der äußeren Mantelfläche (26) der ringförmigen Kopfplatte (11) vorgesehene Außengewinde (14) am unteren Rand der Kopfplatte (11) sich nur über die halbe Höhe des ringförmigen Keilstückes (12) erstreckt und mit einer vom oberen Rand des Außengewindes (14) gebildeten Kante (27) als Anschlag gegen die ringförmige Abdeckung (23) dient.

6. Nivellierschuh nach einem der Ansprüche 1 bis 5, dadurch gekennzeichnet, daß das an der äußeren Mantelfläche (26) der ringförmigen Kopfplatte (11) vorgesehene und sich nur über die halbe Höhe des ringförmigen Keilstückes (12) erstreckende Außengewinde (14) am unteren Rand der Kopfplatte (11) mit einem vom unteren Rand gebildeten Stirnfläche (28) als Anschlag gegen die Fußplatte (10) dient.

7. Nivellierschuh nach einem der Ansprüche 1 bis 6, dadurch gekennzeichnet, daß die Kopfplatte (11) an der äußeren Mantelfläche (26) in dem Bereich, der frei vom Außengewinde (14) ist, eine Abflachung (29) aufweist, in die ein entsprechender Vorsprung (30) der ringförmigen Abdeckung (23) eingreift.

8. Nivellierschuh nach einem der Ansprüche 1 bis 7, dadurch gekennzeichnet, daß die Schnecke (17) in einem Durchbruch (31) des Gehäuses (20) drehbar gelagert ist und etwa in seiner Längsmitte den eingängigen Schneckengang (32) und an dem einen Ende einen Sechskantkopf (33) und an dem anderen Ende eine Sechskantmutter (34) aufweist, die als Anschläge für die von Anschlagflächen (35) des Gehäuses 20 gebildeten Abflachungen dienen.

9. Nivellierschuh nach einem der Ansprüche 1 bis 8, dadurch gekennzeichnet, daß die ringförmige Kopfplatte (11) oberseitig eine kalottenförmige Auflagefläche (36) für eine entsprechend ausgebildete Stützplatte (37) aufweist.

10. Nivellierschuh nach einem der Ansprüche 1 bis 9, dadurch gekennzeichnet, daß die im Durchbruch (31) des Gehäuses (20) drehbar gelagerte Schnecke (17) formschlüssig mit einer zweiten im Durchbruch (31) eines zweiten Gehäuses (20) drehbar gelagerten Schnecke (17) miteinander kuppelbar ist, wobei die beiden Gehäuse (20) zusammen auf der Fußplatte (10) gehaltert sind.
